# EUROPEAN PATENT SPECIFICATION

(11) **EP 2 631 078 B1**
(45) Date of publication and mention of the grant of the patent: **16.10.2019**
(21) Application number: 13000405.4
(22) Date of filing: 28.01.2013
(51) Int. Cl.: B41J 13/00, B65H 7/06, B65H 3/06

(54) **Sheet transporting apparatus, image reading apparatus and image printing apparatus**
Bogentransportvorrichtung, Bildlesevorrichtung und Bilddruckvorrichtung
Appareil de transport de feuille, appareil de lecture d'image et appareil d'impression d'image

(30) Priority: 31.01.2012 JP 2012018364
(43) Date of publication of application: 28.08.2013
(73) Proprietor: CANON KABUSHIKI KAISHA, Tokyo (JP)
(72) Inventor: Kobayashi, Nobutsune, Tokyo (JP); Nishida, Tomofumi, Tokyo (JP)
(74) Representative: WESER & Kollegen Patentanwälte PartmbB

(56) References cited:
- EP-A1- 1 803 669
- US-A1- 2004 217 541
- US-A1- 2005 095 050
- US-A1- 2008 006 994

## Description

### BACKGROUND OF THE INVENTION

### Field of the Invention

The present invention relates to a sheet transporting apparatus for transporting a sheet, such as a document sheet or a printing medium, and an image reading apparatus and an image printing apparatus, both equipped with the sheet transporting apparatus.

### Description of the Related Art

An example arrangement for an image reading apparatus equipped with a well known auto document feeder (hereinafter referred to as an "ADF") includes a document sheet (sheet) separating and transporting unit, a motor and a controller, and employs a document edge sensor (DES) to detect a leading edge and a trailing edge of the document sheet. When the leading edge of the document sheet is detected by the document edge sensor, transporting of the document sheet is continued for a predetermined distance, and thereafter, reading of an image on the document sheet is initiated. Subsequently, when the document edge sensor does not detect the trailing edge of the document sheet, even though reading of the image has been performed, it is assumed that jamming of the document sheet (paper jam) has occurred, and an error notification is output.

As another example, an image printing apparatus described in Japanese Patent Laid-Open No. 2008-12815 performs the first driving processing, during which a printing medium (sheet) is fed by a feeding roller to a transporting roller. While this processing is being performed, based on a count value, held by an encoder, corresponding to the number of rotations of the feeding roller, a determination is made as to whether a feeding error of the printing medium occurred. When it is determined that the feeding error did occur, the second driving process, for employing the transporting roller to transport the printing medium a predetermined distance, is performed. Then, the count value held by the encoder during the first driving process and a count value held by an encoder during the second driving process, which corresponds to the number of rotations of the transporting roller, are employed to determine a transporting error in detail, such as a printing medium jam (sheet jam), a motor failure and an absence of the printing medium. The feeding roller and the transporting roller are driven by using the same motor. That is, when the motor is rotated forward, the transporting roller is driven, and when the motor is rotated in reverse, both the feeding roller and the transporting roller are driven.

The image reading apparatus in the first example employs information obtained by the document edge sensor, which detects the leading edge and the trailing edge of the document sheet, and the count value, obtained by the encoder, corresponding to distance of a driving motor travels, in order to determine whether the paper jam has occurred. That is, the paper jam is determined when the document edge sensor can not detect the leading edge or the trailing edge of the document sheet, even though the count value held by the encoder is large. However, according to this processing used to determine the occurrence of the paper jam, the driving motor must be driven until the count value of the encoder reaches a predetermined value or greater, and thus, there is a time lag between the actual occurrence of the paper jam and the detection of the occurrence. Since the driving motor is being driven during the time lag, the jammed document sheet may be damaged.

According to the image printing apparatus provided as the second example, a mechanism that drives the feeding roller and the transporting roller to correlate the first driving process with the second driving process is required in order to perform the second driving process for determining the type of the transporting error in detail. Specifically, as described in Japanese Patent Laid-Open No. 2008-12815, a mechanism is required that switches the driving between the feeding roller and the transporting roller, in accordance with the rotational direction of the motor. Further, the second driving process must be performed even in a case wherein the feeding error has already occurred as a result of the first driving process, and the motor for which a failure has already occurred must be rendered active again for the second driving processing. As a result, the image printing apparatus may be electrically and mechanically damaged.

### SUMMARY OF THE INVENTION

The present invention provides a sheet transporting apparatus that does not require a complicated mechanism to correctly determine, and to cope with, the occurrence of a transporting error for a sheet, such as a document or a printing medium, and an image reading apparatus and an image printing apparatus, both of which are equipped with such a transporting apparatus.

The present invention in its first aspect provides a sheet transporting apparatus as specified in claims 1 to 6.

The present invention in its second aspect provides an image reading apparatus as specified in claim 7.

The present invention in its third aspect provides an image printing apparatus as specified in claim 8.

The present invention in its fourth aspect provides a sheet transporting method as specified in claim 9.

According to the present invention, a plurality of different threshold values are compared with the distance traveled by the sheet transporting mechanism per unit time, and based on these threshold values, a level of a sheet transporting error can be appropriately determined. For example, in a case wherein a document sheet is to be transported by the image reading apparatus, or in a case wherein a printing medium (sheet) is to be transported by the image printing apparatus, the level of the transporting error for the document sheet or the printing medium can be correctly determined. As a result, the transporting error can be eliminated to avoid the electrical and mechanical breakage of the apparatus, and damage to the document sheet or the printing medium.

Further features of the present invention will become apparent from the following description of exemplary embodiments (with reference to the attached drawings).

### BRIEF DESCRIPTION OF THE DRAWINGS

Fig. 1 is a cross sectional view of a document sheet feeding unit of an inkjet printing apparatus, for which the present invention can be applied;
Fig. 2 is a perspective view of a driving system of the document sheet feeding unit in Fig. 1;
Fig. 3 is a block diagram illustrating an arrangement of a control system of an inkjet printing apparatus according to a first embodiment of the present invention;
Fig. 4 is a block diagram illustrating an arrangement of a feedback control system for an ADF motor according to the first embodiment of the present invention;
Fig. 5 is a flowchart for explaining an ADF motor control processing performed in the first embodiment of the present invention;
Fig. 6 is a graph for explaining an example wherein a transporting error is not detected in the control processing in Fig. 5;
Fig. 7 is a graph for explaining an example wherein it is determined in the control processing in Fig. 5 that a transporting error is an operator error;
Fig. 8 is a graph for explaining an example wherein it is determined in the control processing in Fig. 5 that a transporting error is a service error;
Fig. 9 is a flowchart for explaining an ADF motor control processing performed in a second embodiment of the present invention;
Fig. 10 is a perspective view of an essential portion of an inkjet printing apparatus according to a third embodiment of the present invention;
Fig. 11 is a side cross sectional view of a printing medium feeding unit of the printing apparatus in Fig. 10;
Fig. 12 is a side cross sectional view of the printing medium feeding unit of the printing apparatus in Fig. 10;
Fig. 13 is a block diagram illustrating an arrangement of a LF motor feedback control system of the printing apparatus in Fig. 10;
Fig. 14 is a flowchart for explaining a LF motor control processing in the third embodiment of the present invention; and
Fig. 15 is a flowchart for explaining a LF motor control processing performed in a fourth embodiment of the present invention.

### DESCRIPTION OF THE EMBODIMENTS

The embodiments of the present invention will now be described by employing examples, while referring to the drawings.

### (First Embodiment)

This embodiment is an example wherein the present invention is applied for an image reading apparatus that includes a document sheet feeding device (sheet feeding device).

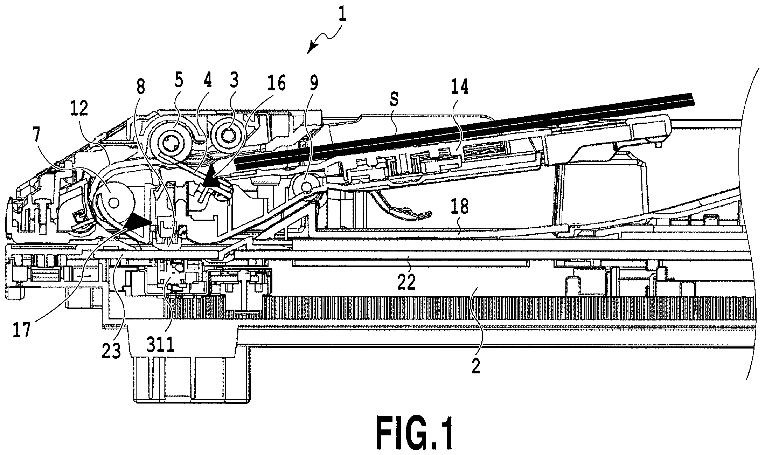

Fig. 1 is a cross sectional view of an essential portion of a document sheet feeding device. A sheet sensor 16 that detects a presence/absence of a document sheet (sheet) S and a document edge sensor 17 that detects a leading edge and a trailing edge of the sheet S are arranged along a sheet transporting path (U turn path) 12 of a transporting unit 1 in the document sheet feeding device. A sheet tray 14 is provided for the transporting unit 1 so as to communicate with an upstream end of the U turn path 12, and a sheet discharge tray 18 is arranged at the downstream end of the U turn path 12. A pickup roller 3 is located on an upstream side of the U turn path, and is employed to contact the topmost sheet stacked on the sheet tray 14 for picking up the sheets S. Further, a separating roller 5 and a separating pad 4 to be pressed against each other are provided in order to separate only the topmost sheet from the other sheets that are picked up by the pickup roller 3. A first transporting roller 7 is arranged near the middle of the U turn path 12, while a second transporting roller 9 is arranged on a downstream side of the U turn path 12 to discharge the sheet S to the sheet discharge tray 18.

A flat bed scanner 2 is provided to scan the sheet S mounted on scanner glass 22. A contact image sensor (hereinafter referred to as a "CIS") 311 is located opposite the transporting unit 1 with the scanner glass 22 in between. For acquisition of image data printed on the sheet S, the CIS 311 employs an LED mounted thereon to emit light to a data printed face of the sheet S, and employs a self-converging rod lens array to collect, to a sensor element, light that was reflected from the data printed face. The CIS 311 is movable to the left or to the right in Fig. 1, and for book page scanning (flat bed scanning), the CIS 311 is moved from left to right in Fig. 1 to read image data of the sheet S mounted on the scanner glass 22. For scanning the sheet S that is transported by the transporting unit 1, the CIS 311 stays at the sheet reading position (position opposite a white scan plate 8), and reads, via ADF glass 23, image data of the sheet S transported to the sheet reading position.

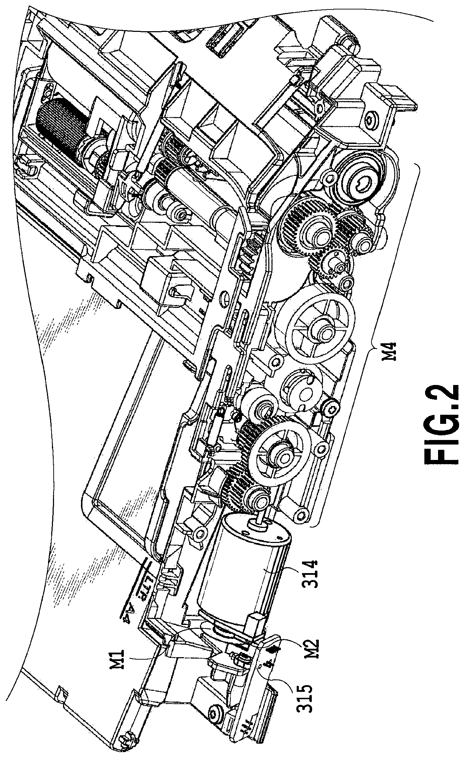

Fig. 2 is an explanatory diagram showing a driving system of the transporting unit 1.

An ADF motor 314 is a DC motor, and an encoder 315 is located near the ADF motor 314. The encoder 315 reads detection slit patterns, printed on a code wheel film M1 that is fitted around a motor shaft of the ADF motor 314, and outputs a detection signal. Based on the detection signal (pulse signal) obtained by the encoder 315, pulse width modulation (PWM) is performed to control the rotation of the ADF motor 314 .

The drive force of the ADF motor 314 is transmitted through a gear string M4 to the separating roller 5, the pickup roller 3, the first transporting roller 7 and the second transporting roller 9. Therefore, each time the transporting mechanism (the transporting roller is included) is driven at a predetermined travel distance by the ADF motor 314, the encoder 315 outputs the detection signal. When the detection signal is counted every unit time, the obtained count value can be employed to detect the travel distance of the transporting mechanism for each unit time. Further, the speed at which the encoder sensor M2 of the encoder 315 reads one detection slit pattern printed on the code wheel film M1 corresponds to the travel speed of the transporting mechanism at that time. For example, in a case of employing an encoder that outputs a detection signal having a width (a pulse width) that corresponds to the travel speed of the transporting mechanism, the width of the detection signal can be employed to detect the travel distance of the transporting mechanism for each unit time.

When an operator issues an instruction to start document reading, the ADF motor 314 rotates the separating roller 5 and the pickup roller 3. In accordance with the rotation of the pickup roller 3, the sheet S is fed into the U turn path 12. At this time, in the transporting unit 1, the sheets S are individually separated by the separating roller 5 and the separating pad 4, and are transported beginning with the topmost sheet S. Each sheet S thus separated is transported along the U turn path 12 by the first transporting roller 7, and reaches the reading unit provided by the CIS 311. The separating roller 5 is rotated at a lower peripheral speed than the first transporting roller 7 and the second transporting roller 9. As a result, when the ADF motor 314 is sequentially rotated, a predetermined distance is defined between the first sheet S and the second sheet S along the U turn path 12.

In the transporting unit 1, when the sheet S has been transported at a predetermined distance following the detection of the leading edge by the document edge sensor (DES) 17, the CIS 311 begins reading of image data of the sheet S, while transporting of the sheet S is continued. Thereafter, when the sheet S has been transported at a predetermined distance following the detection of the trailing edge by the document edge sensor 17, reading of the image data by the CIS 311 is terminated. In a case wherein a succeeding sheet S is present, the rotation of the ADF motor 314 is continued, and reading of the following sheet S is performed. Transporting of the sheets and reading of image data of the sheet is continued until the sheet sensor 16 detects no more sheet is present.

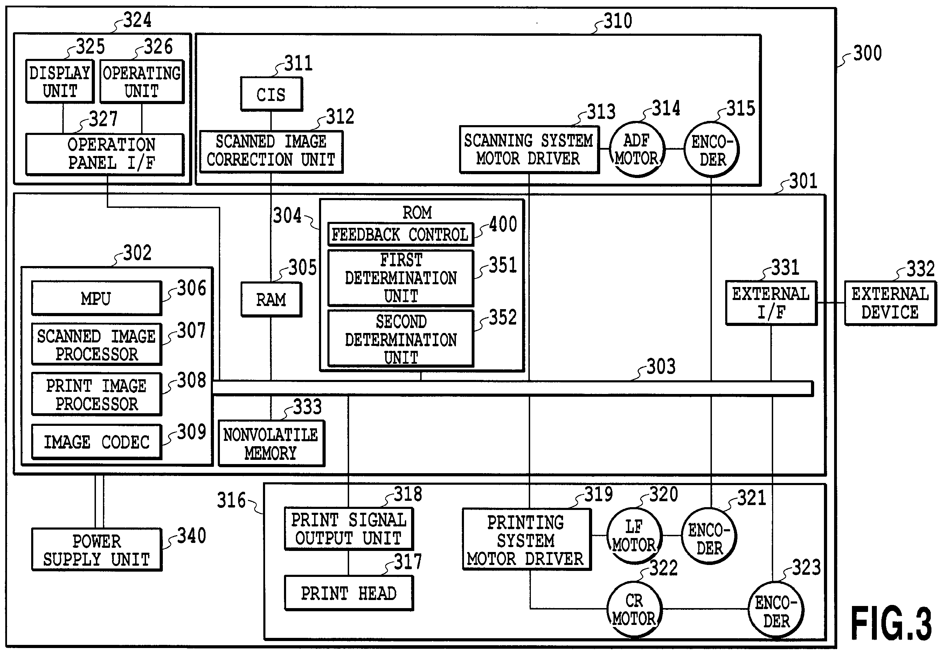

Fig. 3 is a block diagram illustrating an arrangement of a controller 300 of the printing apparatus equipped with the above described document feeding device. The printing apparatus in this embodiment is an inkjet printing apparatus that employs an ink ejection type print head, and also includes a scanning function for image data of the sheet S.

In a main control board 301, a main controller IC 302 includes a microprocessor unit (MPU) 306, a scanned image processor 307, a print image processor 308 and an image codec 309, and controls the entire apparatus via a system bus 303. A ROM 304 is employed to store program code, initial data and table data required for operation of the MPU 306. A RAM 305 is employed as, for example, a calculation buffer and an image memory.

A scanning unit 310 includes a CIS 311, a scanned image correction unit 312 and a scanning system motor driver 313. In the scanning unit 310, when the scanning system motor driver 313 rotates an ADF motor 314, feedback control for the ADF motor 314 is performed by a feedback controller 400, stored in the ROM 304, based on information obtained by an encoder 315. In association with the feedback control, a first determination unit 351 and a second determination unit 352 perform determination processes, as will be described later. The CIS 311 optically and subsequently scans images of the sheets S transported by the ADF motor 314, and converts the obtained optical image signals into electrical image signals. Thereafter, the scanned image correction unit 312 performs, for example, shading correction for the image signals. Then, the scanned image processor 307 performs the image processing for the obtained image signals, and outputs the results as high-resolution image data.

In an ink jet printing unit 316, a printing system motor driver 319 drives a CR motor 322 and an LF motor 320. The CR motor 322 is controlled by the feedback controller 400 based on information obtained by an encoder 323, while the LF motor 320 is controlled by the feedback controller 400 based on information obtained by an encoder 321. Image data prepared by the print image processor 308 is output to an inkjet print head 317 via a print signal output unit 318. The print head 317 includes a plurality of nozzles, from which ink is to be ejected, and employs print data to selectively eject ink from these nozzles. The print head 317 is moved by the CR motor 322, and a printing medium is transported by the LF motor 320 with respect to a printing position opposite the print head 317. The operation for ejecting ink from the print head 317 moved to a predetermined position, based on print data, and the operation for transporting the printing medium are repeated to print an image on the printing medium.

An operation panel 324 is employed to output an image to a display unit 325 via an operation panel interface 327, or to accept an operation instruction entered at an operating unit 326.

An external interface 331 conforms to, for example, the USB standards, and is connected to an external device 332, such as a personal computer. A nonvolatile memory 333 is, for example, a flash memory, and is employed to store work data or image data. A power supply unit 340 supplies electricity power required for the operations of the main control board 301, the reading unit 310, the printing unit 316 and the operation panel 324.

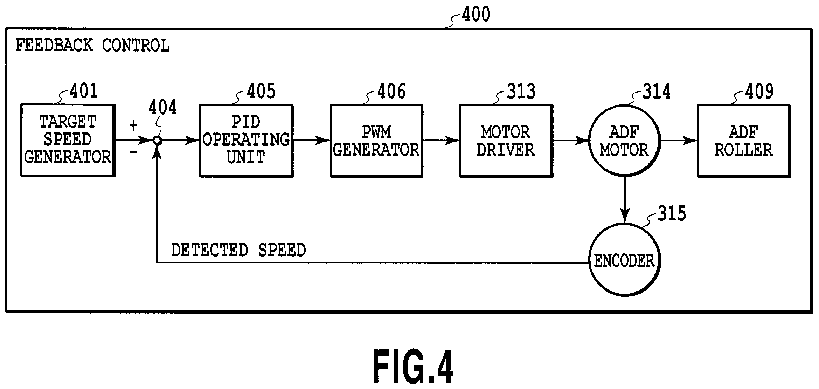

Fig. 4 is a block arrangement diagram for explaining the feedback control function of a feedback controller 400 for the ADF motor 314. The feedback control operation in this embodiment is performed by the MPU 306 based on a control program stored in the ROM 304. The feedback control is repeated for each feedback control period.

A target speed generator 401 generates the target speed of a motor driven by servo control that is gradually changed until the final target position (for example, the position where transporting of the sheet, including the trailing edge, is completed). The output of the encoder 315 is employed to obtain the rotational speed and the rotational distance of the ADF motor 314. The drive force of the ADF motor 314 is transmitted to an ADF roller 409. In this case, the ADF roller 409 is a generalized term for the first transporting roller 7 and the second transporting roller 9. The rotational speed and the rotational distance of the ADF motor 314 correspond to the traveling speed and the travel distance of the transporting mechanism, and further, correspond to the sheet transporting speed and the sheet transporting position, such as the position where the leading edge of the sheet is transported. The transporting speed and the transporting position can be calculated based on the output signal of the encoder 315. Since the calculation is well known, no explanation for this will be given. Information as for the transporting speed (the rotational speed of the roller) and the transporting position (the rotational distance of the roller) is transmitted as a feedback to the MPU 306.

The speed information (the travel distance of the transporting mechanism for each unit time) from the encoder 315 is employed as a feedback by an adder 404. Based on the speed thus corrected using the speed information, a PID operating unit 405 and a PWM generator 406 generate a PWM (Pulse Width Modulation) signal, and output the PWM signal to the motor driver 313. The PWM signal can be represented by using a duty value (a ratio of a high level and a low level in a pulse signal within a predetermined period of time (ON/OFF ratio)), and the range of the value is from 0 to 100%. As the duty value is large, electricity to be supplied to the motor is increased.

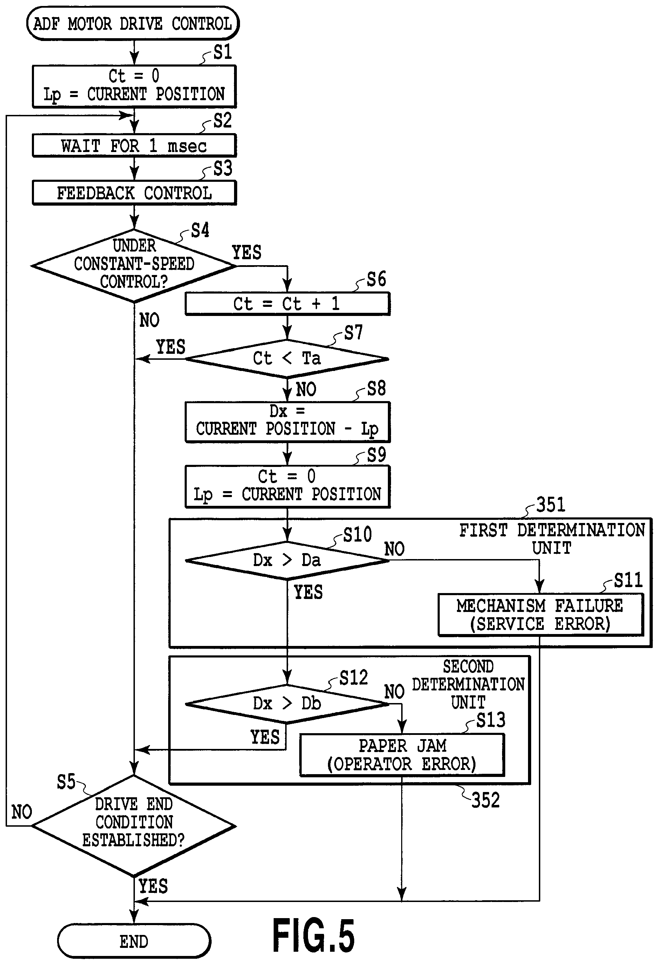

The control of the ADF motor 314 by employing the first determination unit 351 and the second determination unit 352 will now be described while referring to the flowchart in Fig. 5.

First, a time counter Ct is initialized to set a detection timing for a transporting error, and position information at this time (information about the transport position (the rotational distance of the roller) obtained by calculation based on a detection signal of the encoder 315) is stored as location information Lp (step S1). Then, the processing is waited for a predetermined period of time (in this embodiment, 1 msec) (step S2). In this embodiment, the waiting period of 1 msec is an interrupt period during the feedback control of the ADF motor 314, and the processes at the succeeding steps S3 to S5 are performed in the interrupt period. Of course, as another embodiment, the feedback controller 400, the first determination unit 351 and the second determination unit 352 may independently perform the interrupt process.

After the waiting period (1 msec) has elapsed, an interrupt of the feedback control occurs, and the feedback control of the ADF motor 314 is performed (step S3). In the feedback control process, the speed of the ADF motor 314 is controlled by performing the process previously described while referring to Fig. 4. Thereafter, a check is performed to determine whether, for the ADF motor 314, constant-speed control is currently being performed from among acceleration control, constant-speed control and deceleration control (step S4). When the constant-speed control is being performed, the processing moves to step S6 at which the first determination unit 351 and the second determination unit 352 perform the process, or when the constant-speed control is not currently performed, the processing advances to step S5.

The purpose of performing the process at step S4 will now be described.

There are three control types for the motor: acceleration control, constant-speed control and deceleration control, and the acceleration state and the deceleration state are the transitional state of the motor. In the acceleration and deceleration state, the sheet S is transported only at a short distance in a predetermined period of time, regardless of the occurrence of the transporting error, and therefore, it is difficult for the first determination unit 351 and the second determination unit 352 to determine whether a transporting error has occurred. In this embodiment, removing of such an acceleration state and a deceleration state from the target state to be determined is the purpose of the process at step S4. Furthermore, since the period for acceleration and deceleration are short, actually not a big problem will occur even when the transporting error detection is not performed in these periods. Of course, when a more complicated logical process is employed for the first determination unit 351 and the second determination unit 352, the determination of a transporting error can be performed during the periods of the acceleration state and the deceleration state. Since a process required for these can be easily introduced based on a conventional technique, no further explanation for the process will be given.

When it is determined at step S4 that the constant-speed control is not currently performed, a check is performed to determine whether a condition for terminating the driving of the ADF motor 314 is satisfied (step S5). In a case wherein driving of the ADF motor 314 should be continued, the processing moves to step S2, or in a case wherein driving of the ADF motor 314 should be ended, the process sequence for driving control is terminated. The condition for terminating the driving is, for example, a case wherein the document edge sensor (DES) 17 has confirmed that transporting of the sheet has been normally completed.

When it is determined at step S4 that constant-speed control is currently being performed, the value of the time counter Ct is incremented at the beginning of the interrupt process (step S6). The incremented value of the time counter Ct is compared with a setup value Ta for the transporting error detection period (step S7). When the transporting error detection timing does not reach yet, i.e., when Ct < Ta, the processing goes to step S5. When the setup value Ta is too small, detection for the transporting error is too sensitive relative to a sudden noise, and an erroneous determination might occur. When the setup value Ta is too large, early detection of a transporting error can not be performed. Therefore, an optimal setup value should be selected in accordance with the specifications of the apparatus.

When it is determined at step S7 that the transporting error detection timing has reached, i.e., when Ct ≥ Ta, a travel distance (driving amount) Dx of the motor during a period from the preceding detection timing until the current detection timing is obtained (step S8). Specifically, a difference between the location information Lp, stored for the preceding transporting error detection timing, and the location information, obtained by the encoder for the current transporting error detection timing, is calculated to obtain the travel distance Dx. Thereafter, the time counter Ct is initialized, and further, the location information obtained by the encoder 315 for the current transporting error detection timing is stored as location information Lp (step S9). This process is the same as the process at step S1.

Processes at steps S10 and S11 are to be performed by the first determination unit 351.

First, the travel distance Dx is compared with a travel distance (a second threshold value) Da that is a reference for determining a service error (step S10). The travel distance Da as a determination reference is a maximum value that is estimated for a motor travel distance for each transporting error detection period Ta in a case wherein the failure of the encoder or a defect of the motor or the motor driver has occurred. That is, in a case wherein there is a failure in the encoder and so on, the travel distance Da corresponds to the maximum amount of driving amount of the motor that can be driven for each detection period Ta. Therefore, as will be described later, in a case wherein the travel distance Dx does not reach the determination reference distance Da although the detection period Ta has elapsed, it is assumed that a defect, such as the failure of the encoder and so on, has occurred. In this case, the processing advances to step S11 to perform a service error handling process for providing a service error notification for the operator, and thereafter, the control of the ADF motor is terminated. The service error is an error that the operator can not remove the cause, i.e., a failure that can not be removed by the operator, and a service or an advice by a service maintenance person is required.

Processes at steps S12 and S13 following step S10, whereat it is determined that a service error does not occur, are to be performed by the second determination unit 352.

First, the travel distance Dx is compared with a travel distance (first threshold value) Db that is a reference for determining an operator error (step S12). The travel distance Db used as a determination reference is the maximum value of the motor travel distance that can be estimated for each detection period Ta under the condition wherein a defective other than a failure of the apparatus has occurred, e.g., a condition wherein paper is jammed, or a user is pulling the sheet of a document by force. That is, in a case wherein paper jam and so on have occurred, the travel distance Db corresponds to the maximum amount of driving amount of the motor that can be driven for each detection period Ta. Therefore, as will be described later, when the travel distance Dx does not reach the determination reference distance Db although the detection period Ta has elapsed, it is assumed that a defective, such as paper jam, other than the failure of the apparatus, has occurred. In such a case, the processing advances to step S13 for an operator error process, and a notification indicating the occurrence of an operator error is presented to the operator. Thereafter, the control of the ADF motor is terminated. The operator error indicates an error that can be resolved by the operator by removing a jammed sheet, or by releasing the hand from the sheet that has been pulled by force, so that the use of the apparatus is enabled again, i.e., indicates a transporting error that can be removed by an operator to recover the apparatus.

For the travel distance Da used as a service error determination reference and the travel distance Db as an operator error determination reference, a relationship of Da < Db is established.

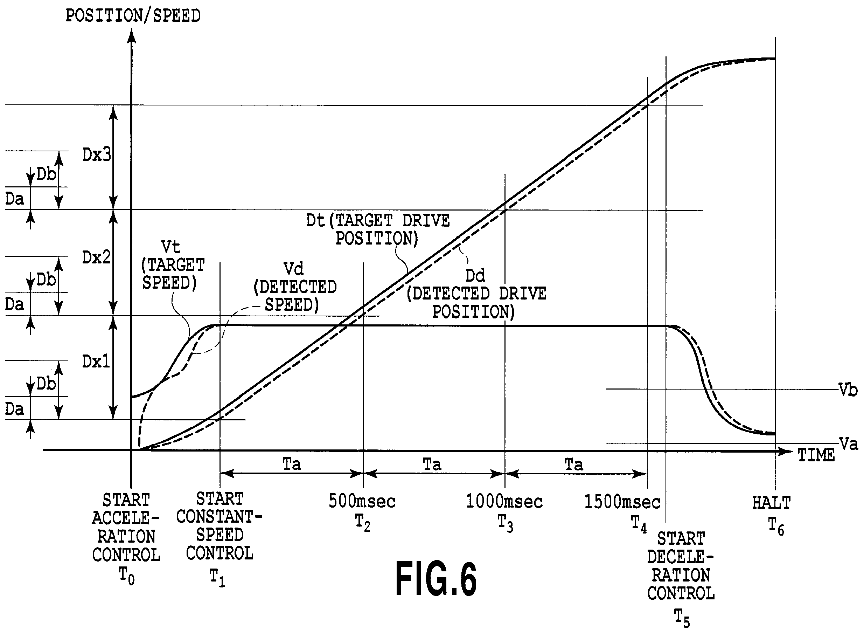

The control for the ADF motor in Fig. 5 will be more specifically described while referring to Figs. 6, 7 and 8.

Fig. 6 is a graph showing an example motor drive profile in a case wherein the motor is normally driven. The horizontal axis represents time, and the vertical axis represents the drive position and the trailing speed of the motor. In this example, the detection period Ta for a transporting error is set as 500 msec. Vt is a target speed for driving the ADF motor (a target value for the driving amount per unit time), and Vd is a speed of the ADF motor actually detected (a driving amount per unit time; the detected speed) . Furthermore, Dt is a target position for driving the ADF motor, and Dd is the drive position (detected drive position) of the ADF motor actually detected. During the acceleration control period (from time T0 to T1) and during the deceleration control period (from time T5 to T6), a delayed reaction relative to the target speed Vt occurs in the actual detected speed Vd. A travel distance Dx in the first period of 500 msec (from time T1 to T2) from the start of the constant-speed control is defined as Dx1. Similarly, a travel distance Dx in the next period of 500 msec (from time T2 to T3) is defined as Dx2, and a travel distance Dx in the following period of 500 msec (from time T3 to T4) is defined as Dx3. Further, a relationship of Da < Db is established between the travel distance (the second threshold value) Da as the service error determination reference and the travel distance (the first threshold value) Db as the operator error determination reference. That is, a difference between the target value for the driving amount per unit time (500 msec) and the travel distance Da is not equal to a difference between the target value for the driving amount per unit (500 msec) and the travel distance Db, and the difference with respect to the travel distance Da is greater than the difference with respect to the travel distance Db.

In Fig. 6, the travel distances Dx1, Dx2 and Dx3 for each transporting error detection period Ta (500 msec) are considerably greater than the travel distances Da and Db that are determination references. Therefore, in the case shown in Fig. 6, the decisions at steps S10 and S12 in Fig. 5 are YES, i.e., the service error and the operation error are not detected, and the ADF motor is normally operated.

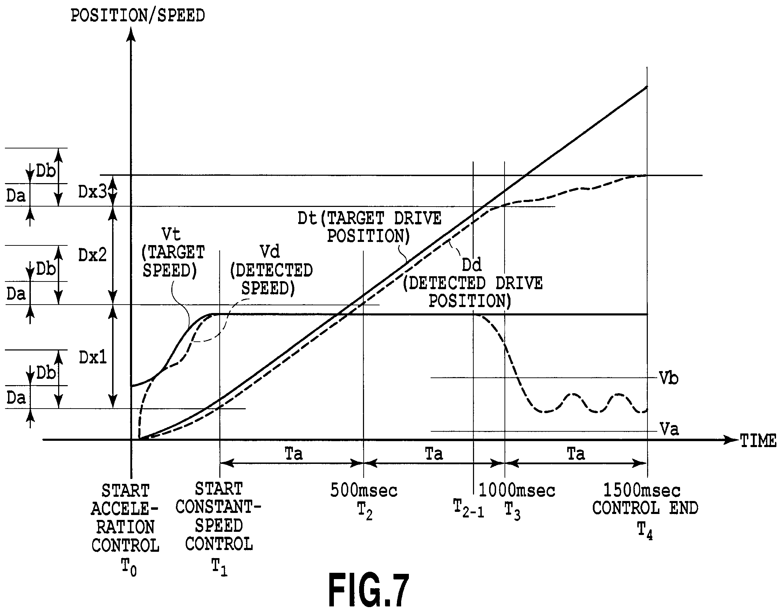

Fig. 7 is a graph showing an example motor drive profile in a case wherein a sheet is jammed while the motor is being operated. When the paper jam has occurred at time T2-1 during the constant-speed control, the sheet slides across the ADF rollers 409, the speed Vd of the ADF motor 314 detected by the encoder 315 is reduced, and a change of the detected drive position Db is also reduced. As a result of a paper jam at the time T2-1, the travel distance Dx3 in a period of time T3 to T4 is smaller than the travel distance Db that is the operator error determination reference, and is greater than the travel distance Da that is the service error determination reference. Therefore, in the case shown in Fig. 7, the decision at step S10 in Fig. 5 is YES, while the decision at step S12 is NO, and, thereafter, the processing advances to the operator error process (step S13).

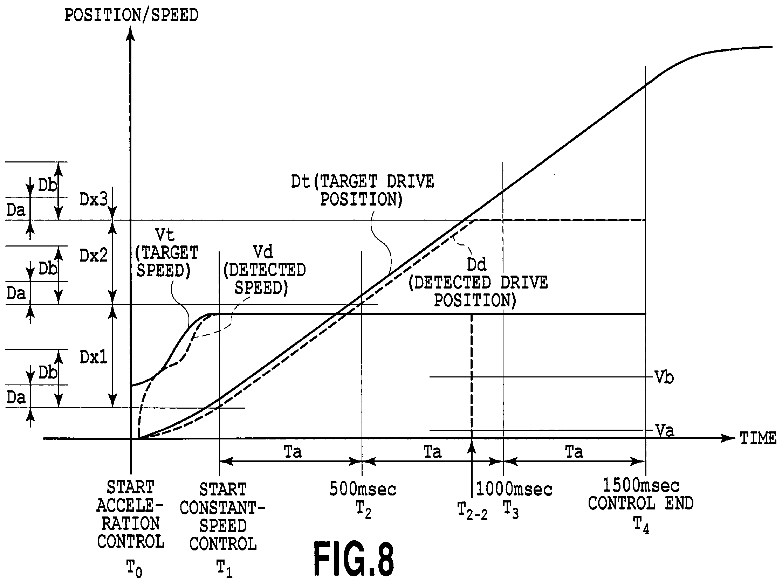

Fig. 8 is a graph showing an example motor drive profile in a case wherein a defect of the transporting mechanism, such as a failure of the encoder, has occurred during the operation of the motor. When a failure has occurred in the encoder 315 at time T2-2 during the constant-speed control, updating of the speed information and location information is halted. As a result of the failure of the encoder at time T2-2, the travel distance Dx3 in the period of time T3 to T4 is smaller than the travel distance Da for the service error determination reference and the travel distance Db for the operator error determination reference. In the case shown in Fig. 8, the decision at step S10 in Fig. 5 is NO, and the processing advances to the service error process (step S11).

### (Second Embodiment)

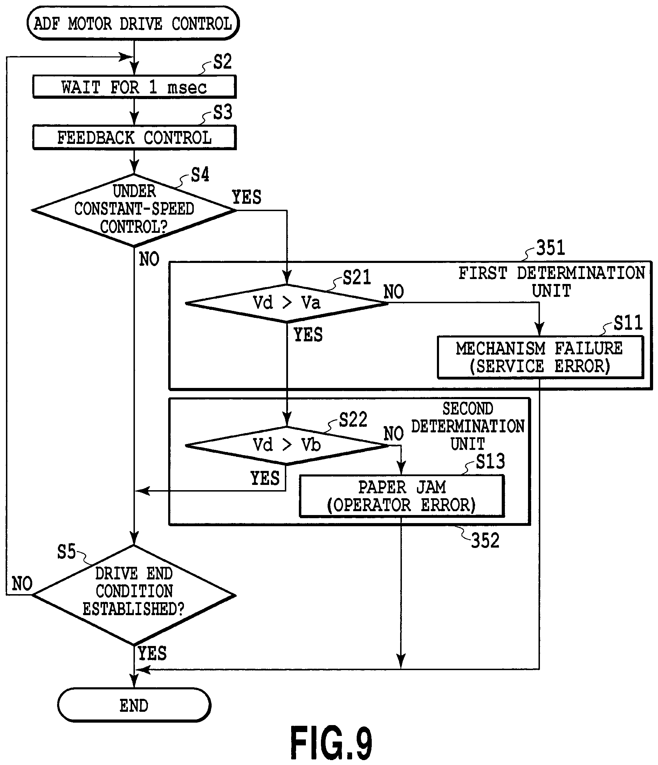

In this embodiment, a drive control for the ADF motor shown in Fig. 9 will be performed instead of the drive control of the ADF motor in Fig. 5 for the first embodiment. Furthermore, a method for employing data shown in the motor drive profiles in Figs. 6, 7 and 8 differs from that for the first embodiment. The structure is the same as that for the first embodiment, and the reference numbers and step numbers employed in the ADF motor drive control in Fig. 5 are also provided for the corresponding portions in Fig. 9.

In the drive control processing in Fig. 9, first, the processing is in the waiting state for a predetermined period of time (1 msec in this embodiment) (step S2). In this embodiment, the waiting period of 1 msec is an interrupt period of the feedback control of the ADF motor 314, and the processes at the following steps S3 to S5 are performed in the interrupt period. Of course, as another embodiment, the feedback control, the first determination unit 351 and the second determination unit 352 may independently perform the interrupt processing.

After the waiting period (1 msec) has elapsed, the interrupt for the feedback control occurs, and the feedback control of the ADF motor 314 is performed (step S3). In the feedback control process, the speed of the ADF motor 314 is controlled by performing the process previously described while referring to in Fig. 4. Thereafter, a check is performed to determine whether, from among acceleration control, deceleration control and constant-speed control for the ADF motor 314, the constant-speed control is currently being performed (step S4). When the constant-speed control is currently being performed, the processing moves to step S21 to perform the process using the first determination unit 351 and the second determination unit 352, or when the constant-speed control is not currently performed, the processing advances to step S5.

When it is determined at step S4 that the constant-speed control is not currently performed, a check is performed to determine whether a condition for terminating driving of the ADF motor 314 is satisfied (step S5). In a case wherein driving of the ADF motor 314 should be continued, the processing is returned to step S2, or in a case wherein driving of the ADF motor 314 should be terminated, the process sequence of the drive control is terminated. The drive termination condition is, for example, a case wherein the document edge sensor (DES) 17 confirms that the transporting of the sheet is normally completed.

Processes at step S21 and S11 are to be performed by the first determination unit 351.

First, the latest detected speed Vd (see Figs. 6, 7 and 8) is compared with a drive speed Va that is a reference for determining a service error (step S21). The drive speed Va as a determination reference is a maximum value that is estimated for a motor drive speed for each transporting error detection period Ta in a case wherein the failure of the encoder or a defect of the motor or the motor driver has occurred. That is, in a case wherein there is a failure in the encoder, the drive speed Va corresponds to the maximum drive speed of the motor that can be driven for each detection period Ta. Therefore, in a case wherein the detected speed Vd does not reach the determination reference drive speed Va although the detection period Ta has elapsed, it is assumed that a defect, such as the failure of the encoder, has occurred. In this case, the processing advances to step S11 to perform a service error handling process for providing the service error notification for the operator, and thereafter, the control of the ADF motor is terminated. The service error is an error, the cause of which the operator can not remove, i.e., a failure that can not be removed by the operator, and a service or an advice by a service maintenance person is required.

Processes at steps S22 and S13 following step S21, whereat it is determined that the service error does not occur, are to be performed by the second determination unit 352.

First, the latest detected speed Vd (see Figs. 6, 7 and 8) is compared with a drive speed Vb that is a reference for determining an operator error (step S22). The drive speed Vb used as a determination reference is the maximum value of the motor drive speed that can be estimated for each detection period Ta under the condition wherein a defective other than a failure of the apparatus has occurred, e.g., a condition wherein paper is jammed, or a user has pulled the sheet of a document by force. That is, in a case wherein a paper jam has occurred, the drive speed Vb corresponds to the maximum drive speed of the motor that can be driven for each detection period Ta. Therefore, when the detected speed Vd does not reach the determination reference speed Vb although the detection period Ta has elapsed, it is assumed that a defective, such as paper jam, other than the failure of the apparatus, has occurred. In such a case, the processing advances to step S13 for an operator error handling process, and a notification indicating the occurrence of the operator error is presented to the operator. Thereafter, the control of the ADF motor is terminated. The operator error indicates an error that can be resolved by the operator by removing a jammed sheet, or by releasing the hand from the sheet that has been pulled by force, so that the use of the apparatus is enabled again.

The drive speed Va used as a service error determination reference and the drive speed Vb used as an operator error determination reference have a relationship of Va < Vb.

The control for the ADF motor in Fig. 9 will be more specifically described while referring to Figs. 6, 7 and 8.

In the motor drive profile shown in Fig. 6 for the case wherein the motor is normally driven, the drive speed Va is a service error determination reference, while the drive speed Vb is an operator error determination reference, and the relationship of Va < Vb is established between these drive speeds. During the constant-speed control in Fig. 6, the detected speed Vd does not exceed the determination reference speeds Va and Vb. Therefore, in the case shown in Fig. 6, since the decisions at steps S21 and S22 in Fig. 9 are YES, the service error and the operator error are not detected, and the ADF motor is normally driven.

In the case shown in Fig. 7 wherein the paper jam has occurred at time T2-1 during the constant-speed control, the detected speed Vd is lower than the drive speed Vb. When the detected speed Vd is lower than the drive speed Vb, the decision at step S21 in Fig. 9 is YES, while the decision at step S22 is NO, and thereafter, the processing advances to the operator error handing process (step S13).

In the case shown in Fig. 8, wherein a defect of the mechanism, such as the failure of the encoder, has occurred at time T2-2 during the constant-speed control, the detected speed Vd is lower than the drive speed Va. When the detected speed Vd is lower than the drive speed Va, the decision at step S21 in Fig. 9 is NO, and the processing goes to the service error handling process (step S11).

### (Third Embodiment)

This embodiment is an example wherein the present invention is applied for an inkjet printing apparatus (image printing apparatus) that includes a mechanism for transporting a printing medium (printing sheet).

In the following description, "printing" represents not only a case wherein significant information, such as characters and figures, are formed, and but also includes a case wherein an image, a design or a pattern is formed on a printing medium, regardless of whether information is significant or not, or regardless of whether the information is visually presented so as to be recognized by a person, and a case wherein the processing for a printing medium is performed. Further, a "printing medium" represents not only paper employed for a general printing apparatus, but also includes a variety of materials, such as cloth, plastic film, metal sheets, glass, ceramics, a wood material and leather, that can accept ink. Furthermore, the definition of "ink" (also called a "liquid") should be widely interpreted in the same manner as the definition of "printing". That is, ink represents a liquid that is applied to a printing medium in order to form an image, a design or a pattern, or to process the printing medium, or to perform treating of ink (for example, coagulating or insolubilizing of the coloring material of ink to be applied to a printing medium). Further, so long as not especially designated, a "nozzle" is a generalized term for an ejection port, a liquid path that communicates with the ejection port and an element that generates energy employed for ink ejection (ejection energy generating element).

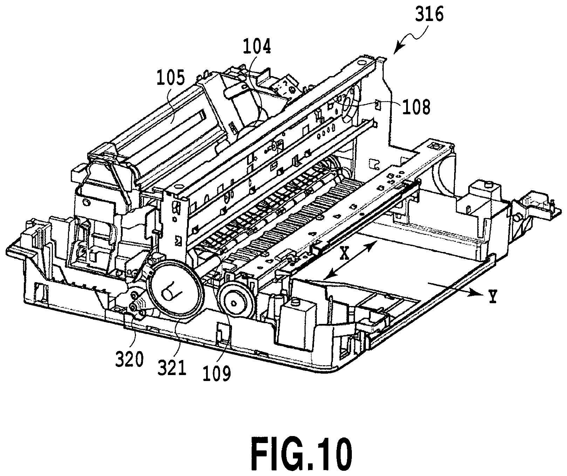

Fig. 10 is a perspective view of the essential portion of an inkjet printing apparatus for which the present invention can be applied.

In Fig. 10, a transporting motor (an LF motor) 320 is a drive source to transport a printing medium (a sheet), such as a printing sheet P of paper, and a transporting roller (an LF roller; a second roller) 109 is employed for transporting the printing sheet P. A rotary encoder 321 is mounted coaxially with the LF roller 109 to detect the location and the speed of the LF roller 109. A feeding roller (first roller) 104 is employed to feed the printing sheet P, and a pressure plate 105 is employed to press, against the feeding roller 104, the printing sheet P mounted thereon. A feeding lever 108 is employed to communicate the movement of the LF roller 109 with the movement of the feeding roller 104. When a carriage (not shown) on which an inkjet print head (or simply, a print head) is mounted is moved in a main scan direction indicated by an arrow X, and pushes down the feeding lever 108, the drive force of the LF roller 109 is transmitted to the feeding roller 104. The printing apparatus of this embodiment is a so-called serial scan type inkjet printing apparatus. In other words, in a case wherein an image is to be printed on the printing sheet P, an operation in which the print head ejects ink, while moving with the carriage in the main scan direction and a operation in which the printing sheet P is transported in a sub-scan direction, indicated by an arrow Y, that intersects (is perpendicular to, in this embodiment) the main scan direction are repeated.

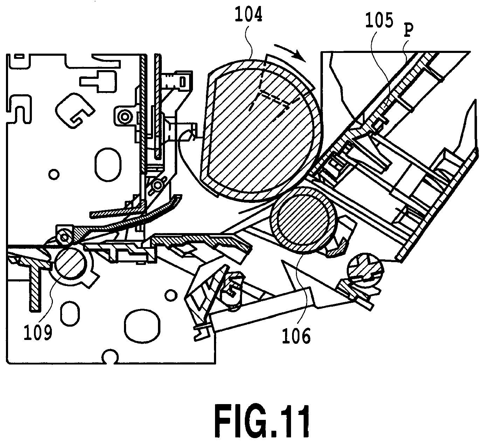

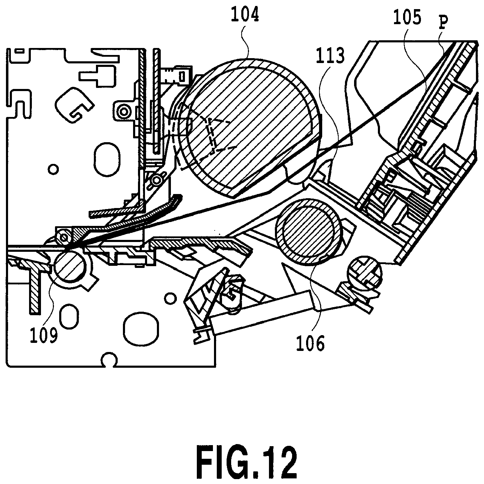

Figs. 11 and 12 are cross sectional views of a structure of a transporting mechanism of the printing apparatus in Fig. 10.

A separating roller 106 separates the topmost printing sheet P from the other printing sheets P stacked on the pressure plate 105. That is, when feeding of the printing sheets P is started, as shown in Fig. 11, the pressure plate 105 is elevated and presses the stacked printing sheets P against the feeding roller 104, and the feeding roller 104 and the separating roller 106 grip the topmost printing sheet P. When the feeding roller 104 and the separating roller 106 sandwich one printing sheet P, a return lever 113 (see Fig. 12) holds down the rest of the printing sheets P to the pressure plate 105. The return lever 113 is arranged at the location apart from the feeding roller 104 in the widthwise direction of the printing sheet P (the direction perpendicular to the plane of paper in Fig. 12). When the separated printing sheet P has been transported to the vicinity of the LF roller 109, the pressure plate 105 descends, as shown in Fig. 12, to separate the separating roller 106 from the feeding roller 104.

Since the arrangement of a controller for the printing apparatus in this embodiment is the same as that for the controller 300 in Fig. 3 for the first embodiment, no further explanation for this will be given.

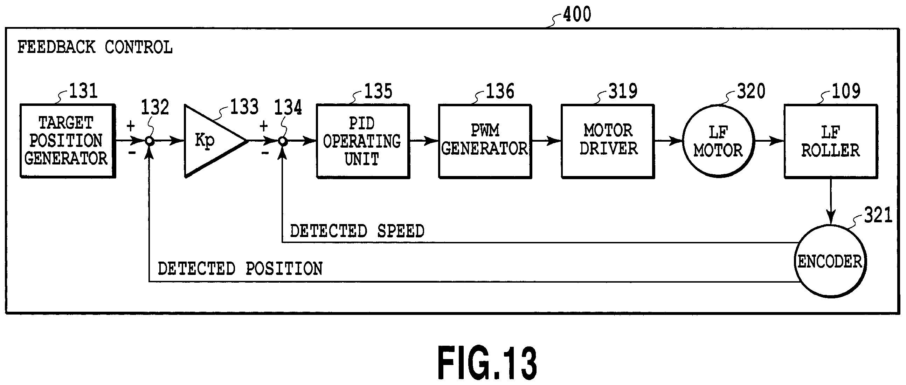

Fig. 13 is a block diagram showing the arrangement of the printing apparatus of this embodiment for explaining the function of a feedback controller 400 to perform feedback control for the LF motor 320. The feedback control of this embodiment is performed by the MPU 306 based on a control program stored in the ROM 304. It should be noted that the feedback control is repetitively performed for each feedback control period.

A target position generator 131 performs servo control to generate a target motor drive position that is gradually raised until the final target position (e.g., the print start position for a printing medium). Based on the output of the encoder 321, the rotational speed and the amount of rotation of the LF roller 109 (the drive speed and the driving amount) are obtained. The rotational speed and the amount of rotation of the LF roller 109 correspond to the transporting speed of the printing medium P and the transporting position of the printing medium P (the transporting position of the leading edge). Since the calculation for the transporting speed and the transporting position is well known, no further explanation for this will be given. The information for the transporting speed (the rotational speed) and the transporting position (the amount of rotation) is transmitted as a feedback to the MPU 306.

In a case wherein the drive force of the DC motor is transmitted to the feeding roller 104, a gear ratio of transmission means provided between the feeding roller 104 and the LF roller 109 is obtained in advance. Therefore, based on this gear ratio, the amount of rotation of the feeding roller 104 can be calculated by employing the amount of rotation of the LF roller 109, and the rotational speed of the feeding roller 104 can be calculated from the rotational speed of the LF roller 109. Therefore, when the MPU 306 controls the rotation of the feeding roller 104, the MPU 306 can employ a signal transmitted from the encoder 321, provided for the rotating LF roller 109, and obtain information about the amount of rotation and the rotational speed of the feeding roller 104. As described above, the MPU 306 indirectly obtains information about the feeding roller 104 from the encoder 321 provided for the LF roller 109, and controls the rotation of the feeding roller 104.

An adder 132 employs the information (location information), obtained by the encoder 321, about the amount of rotation of the LF roller 109, as a feedback to the target position received from the target position generator 131. Further, an adder 134 employs information (speed information) for the speed detected by the encoder 321, as a feedback to the target speed received from a differentiator 133. The target position corresponds to, for example, the amount of rotation of the LF roller 109.

Based on the target speed that is corrected based on the speed information received from the encoder 321, a PID operating unit 135 and a PWM generator 136 generate a PWM (Pulse Width Modulation) signal, and output the signal to the motor driver 319. The PWM signal can be represented by using a duty value (a ratio of the high level and the low level of a pulse signal in a predetermined period of time (ON/OFF ratio)), and the range of the value is 0% to 100%. As the duty value is large, the electricity to be supplied to the motor is increased.

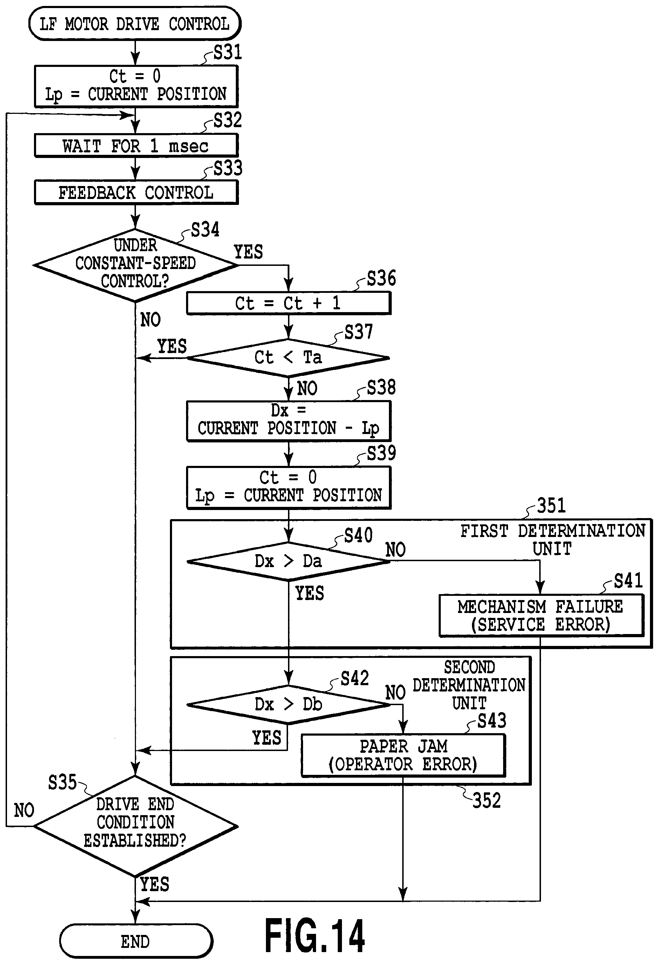

The drive control of the LF motor using the first determination unit 351 and the second determination unit 352 will now be described by employing the flowchart in Fig. 14.

First, a time counter Ct is initialized to set a detection timing for a transporting error, and position information obtained by the encoder 321 is stored as location information Lp (step S31). Then, the processing is waited for a predetermined period of time (in this embodiment, 1 msec) (step S32). In this embodiment, the waiting period of 1 msec is an interrupt period during the feedback control of the LF motor 320, and the processes at the succeeding steps S33 to S35 are to be performed in the interrupt period. Of course, as another embodiment, the feedback controller, the first determination unit 351 and the second determination unit 352 may independently perform the interrupt process.

After the waiting period (1 msec) has elapsed, an interrupt of the feedback control occurs, and the feedback control of the LF motor 320 is performed (step S33). In the feedback control process, the speed of the LF motor 320 is controlled by performing the process previously described while referring to Fig. 13. Thereafter, a check is performed to determine whether, for the LF motor 320, constant-speed control is currently being performed from among acceleration control, constant-speed control and deceleration control (step S34). When the constant-speed control is being currently performed, the processing moves to step S36 at which the first determination unit 351 and the second determination unit 352 perform the process, or when the constant-speed control is not currently performed, the processing advances to step S35.

The purpose of performing the process at step S34 will now be described.

There are three control types for the motor: acceleration control, constant-speed control and deceleration control, and the acceleration state and the deceleration state are the transitional states of the motor. In the acceleration and deceleration state, the sheet S is transported only at a short distance in a predetermined period, regardless of the occurrence of a transporting error, and therefore, it is difficult for the first determination unit 351 and the second determination unit 352 to determine whether the transporting error has occurred. In this embodiment, removing of such an acceleration state and a deceleration state from the state to be determined is the purpose of the process at step S34. Furthermore, since the periods for acceleration and deceleration are short, actually not a big problem will occur when transporting error detection is not performed in this period. Of course, when a more complicated logical process is employed for the first determination unit 351 and the second determination unit 352, the determination of the transporting error can be performed during the periods of the acceleration state and the deceleration state. Since the process required for this can be easily introduced based on a conventional technique, no further explanation for this will be given.

When it is determined at step S34 that the constant-speed control is not currently performed, a check is performed to determine whether a condition for terminating the driving of the LF motor 320 is satisfied (step S35). In a case wherein driving of the LF motor 320 should be continued, the processing is moved to step S32, or in a case wherein driving of the LF motor 320 should be ended, the process sequence for driving control is terminated. The condition for terminating the driving is, for example, a case wherein, by driving the LF motor 320 one time, the printing sheet P has been transported at a predetermined distance required for beginning a new line.

When it is determined at step S34 that constant-speed control is currently being performed, the value of the time counter Ct is incremented at the beginning of the interrupt process (step S36). The incremented value of the time counter Ct is compared with a period setup value Ta for the transporting error detection (step S37). When the transporting error detection timing is not reached, i.e., when Ct < Ta, the processing goes to step S35. When the setup value Ta is too small, detection for the transporting error is too sensitive relative to a sudden noise, and an erroneous determination might occur. When the setup value Ta is too large, early detection of a transporting error can not be performed. Therefore, an optimal setup value should be selected in accordance with the specifications of the apparatus.

When it is determined at step S37 that the transporting error detection timing is reached, i.e., when Ct ≥ Ta, a travel distance (a driving amount) Dx of the motor in a period from the preceding detection timing until the current detection timing is obtained (step S38). Specifically, a difference between the location information Lp, stored for the preceding transporting error detection timing, and the location information, obtained by the encoder for the current transporting error detection timing, is calculated to obtain the travel distance Dx. Thereafter, the time counter Ct is initialized, and further, the location information obtained by the encoder for the current transporting error detection timing is stored as location information Lp (step S39). This process is the same as the process at step S21.

Processes at steps S40 and S41 are to be performed by the first determination unit 351.

First, the travel distance Dx is compared with a travel distance (a second threshold value) Da that is a reference for determining a service error (step S40). The travel distance Da as a determination reference is a maximum value that is estimated for a motor travel distance for each transporting error detection period Ta in a case wherein the failure of the encoder or a defect of the motor or the motor driver has occurred. That is, in a case wherein there is a failure in the encoder and so on, the travel distance Da corresponds to the maximum driving amount of the motor that can be driven for each detection period Ta. Therefore, in a case wherein the travel distance Dx does not reach the determination reference distance Da although the detection period Ta has elapsed, it is assumed that a defect, such as the failure of the encoder, has occurred. In this case, the processing advances to step S41 to perform a service error handling process for providing a service error notification for the operator, and thereafter, the control of the LF motor 320 is terminated. The service error is an error that the operator can not remove the cause, i.e., a failure that can not be removed by the operator, and a service or an advice by a service maintenance person is required.

Processes at steps S42 and S43 following step S40, whereat it is determined that the service error does not occur, are to be performed by the second determination unit 352.

First, the travel distance Dx is compared with a travel distance (a first threshold value) Db that is a reference for determining an operator error (step S42). The travel distance Db used as a determination reference is the maximum value of the motor travel distance that can be estimated for each detection period Ta under the condition wherein a defective other than a failure of the apparatus has occurred, e.g., a condition wherein paper is jammed, or a user has pulled the sheet of a document by force. That is, in a case wherein a paper jam and so on have occurred, the travel distance Db corresponds to the maximum driving amount of the motor that can be driven for each detection period Ta. Therefore, when the travel distance Dx does not reach the determination reference distance Db although the detection period Ta has elapsed, it is assumed that a defective, such as paper jam, other than the failure of the apparatus, has occurred. In such a case, the processing advances to step S43 for an operator error handling process, and a notification indicating the occurrence of the operator error is presented to the operator. Thereafter, the control of the LF motor 320 is terminated. The operator error indicates a transporting error that can be resolved by the operator by removing a jammed sheet, or by releasing the hand from the sheet that has been pulled by force, so that the use of the apparatus is enabled again.

The travel distance Da used as the service error determination reference and the travel distance Db used as the operator error determination reference have a relationship of Da < Db.

The control for the LF motor 320 in Fig. 14 will be more specifically described while referring to Figs. 6, 7 and 8.

In the motor drive profile shown in Fig. 6 for a case wherein the motor is normally driven, for the travel distance Da used as the service error determination reference and the travel distance Db used as the operator error determination reference, a relationship of Da < Db is established. During the constant-speed control in Fig. 6, the travel distances Dx1, Dx2 and Dx3 are considerably greater than the travel distances Da and Db that are determination references. Therefore, in the case shown in Fig. 6, since the decisions at steps S40 and S42 in Fig. 14 are YES, the service error and the operator error are not detected, and the LF motor 320 is normally driven.

In a case shown in Fig. 7 wherein a paper jam has occurred at time T2-1 during the constant-speed control, the travel distance Dx3 is smaller than the determination reference distance Db. When the travel distance Dx3 is smaller than the reference travel distance Da, the decision at step S40 in Fig. 14 is YES, while the decision at step S42 is NO, and thereafter, the processing advances to the operator error handing process (step S43) .

In a case, shown in Fig. 8, wherein a defect of the mechanism, such as the failure of the encoder, has occurred at time T2-2 during the constant-speed control, the travel distance Dx3 is smaller than the reference travel distance Da. When the travel distance Dx3 is smaller than the reference distance Da, the decision at step S40 in Fig. 14 is NO, and the processing goes to the service error handling process (step S41) .

### (Fourth Embodiment)

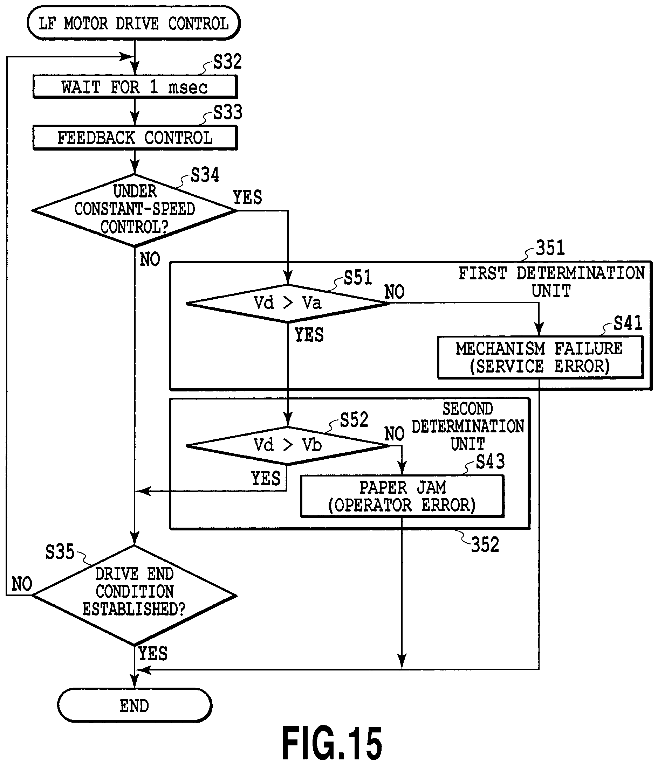

In this embodiment, the drive control for the LF motor shown in Fig. 15 will be performed instead of the drive control of the LF motor in Fig. 14 for the third embodiment. Furthermore, a method for employing data shown in the motor drive profiles in Figs. 6, 7 and 8 differs from that for the third embodiment. The structure is the same as that for the third embodiment, and the reference numbers and step numbers employed in the LF motor drive control in Fig. 15 are also provided for the corresponding portions in Fig. 14.

In the drive control processing in Fig. 15, first, the processing is in the waiting state for a predetermined period of time (1 msec in this embodiment) (step S32). In this embodiment, the waiting period of 1 msec is an interrupt period of the feedback control of the LF motor 320, and the processes at the following steps S33 to S35 are performed in the interrupt period. Of course, as another embodiment, the feedback control, the first determination unit 351 and the second determination unit 352 may independently perform the interrupt processing.

After the waiting period (1 msec) has elapsed, an interrupt for the feedback control occurs, and the feedback control of the LF motor 320 is performed (step S33). In the feedback control process, the speed of the LF motor 320 is controlled by performing the process previously described while referring to in Fig. 13. Thereafter, a check is performed to determine whether, from among acceleration control, deceleration control and constant-speed control for the LF motor 320, the constant-speed control is currently being performed (step S34). When the constant-speed control is currently being performed, the processing moves to step S51 to perform the process using the first determination unit 351 and the second determination unit 352, or when the constant-speed control is not currently performed, the processing advances to step S35.

When it is determined at step S34 that the constant-speed control is not currently performed, a check is performed to determine whether a condition for terminating driving of the LF motor 320 is satisfied (step S35). In a case wherein driving of the LF motor 320 should be continued, the processing is returned to step S32, or in a case wherein driving of the LF motor 320 should be terminated, the process sequence of the drive control is terminated. The drive termination condition is, for example, a case wherein, by driving the LF motor 320 one time, the printing sheet P has been transported at a distance required for starting a new line.

Processes at step S51 and S41 are to be performed by the first determination unit 351.

First, the latest detected speed Vd (see Figs. 6, 7 and 8) is compared with a drive speed Va (a second threshold value) that is a reference for determining the service error (step S51). The drive speed Va as a determination reference is a maximum value that is estimated for the motor drive speed for each transporting error detection period Ta in a case wherein the failure of the encoder or a defect of the motor or the motor driver has occurred. That is, in a case wherein there is a failure in the encoder and so on, the drive speed Va corresponds to the maximum drive speed of the motor that can be driven for each detection period Ta. Therefore, in a case wherein the detected speed Vd does not reach the determination reference drive speed Va although the detection period Ta has elapsed, it is assumed that a defect, such as the failure of the encoder, has occurred. In this case, the processing advances to step S41 to perform a service error handling process for providing a service error notification for the operator, and thereafter, the control of the LF motor 320 is terminated. The service error is an error, the cause of which the operator can not remove, i.e., a failure that can not be removed by the operator, and a service or an advice by a service maintenance person is required.

Processes at steps S52 and S53 following step S51, whereat it is determined that the service error does not occur, are to be performed by the second determination unit 352.

First, the latest detected speed Vd (see Figs. 6, 7 and 8) is compared with a drive speed Vb (a first threshold value) that is a reference for determining an operator error (step S52). The drive speed Vb used as a determination reference is the maximum value of the motor drive speed that can be estimated for each detection period Ta under the condition wherein a defective other than a failure of the apparatus has occurred, e.g., a condition wherein paper is jammed or a user has pulled the sheet of a document by force. That is, in a case wherein a paper jam has occurred, the drive speed Vb corresponds to the maximum drive speed of the motor that can be driven for each detection period Ta. Therefore, when the detected speed Vd does not reach the determination reference speed Vb although the detection period Ta has elapsed, it is assumed that a defective, such as paper jam, other than the failure of the apparatus, has occurred. In such a case, the processing advances to step S43 for an operator error handling process, and a notification indicating the occurrence of an operator error is presented to the operator. Thereafter, the control of the LF motor 320 is terminated. The operator error is a transporting error that can be resolved by the operator by removing a jammed sheet, or by releasing the hand from the sheet that has been pulled by force, so that the use of the apparatus is enabled again.

The drive speed Va used as the service error determination reference and the drive speed Vb used as the operator error determination reference have a relationship of Va < Vb.

The control for the LF motor 320 in Fig. 15 will be more specifically described while referring to Figs. 6, 7 and 8.

In the motor drive profile shown in Fig. 6 for a case wherein the motor is normally driven, a drive speed Va is a service error determination reference, while a drive speed Vb is an operator error determination reference, and as described above, a relationship of Va < Vb is established between these drive speeds. During the constant-speed control in Fig. 6, the detected speed Vd does not exceed the determination reference speeds Va and Vb. Therefore, in the case shown in Fig. 6, since the decisions at steps S51 and S52 in Fig. 15 are YES, the service error and the operator error are not detected, and the LF motor 320 is normally driven.

In a case shown in Fig. 7 wherein a paper jam has occurred at time T2-1 during the constant-speed control, the detected speed Vd is lower than the drive speed Vb. When the detected speed Vd is lower than the drive speed Vb, the decision at step S51 in Fig. 15 is YES, while the decision at step S52 is NO, and thereafter, the processing advances to the operator error handing process (step S43).

In a case, shown in Fig. 8, wherein a defect of the mechanism, such as the failure of the encoder, has occurred at time T2-2 during the constant-speed control, the detected speed Vd is lower than the drive speed Va. When the detected speed Vd is lower than the drive speed Va, the decision at step S51 in Fig. 15 is NO, and the processing goes to the service error handling process (step S41).

### (Other Embodiment)

The present invention can be applied for various transporting apparatuses that can transport a variety of sheet-shaped materials, and such a transporting apparatus can be incorporated into various apparatuses, such as a document feeding apparatus for an image reading apparatus and a printing medium transporting apparatus for an image printing apparatus. Furthermore, the present invention can also be applied not only for the above described serial scan type inkjet printing apparatuses, but also for various types of full-line image printing apparatuses.

In the above described embodiments, two different threshold values have been employed to determine a transporting error that occurs during transporting of a sheet. However, three or more different threshold values and the target value for the travel distance of a transporting mechanism per unit time may be employed, and based on the comparison results of these, a transporting error can be determined at multi-levels. Further, a difference relative to the target value of the travel distance of the transporting mechanism per unit time may be varied depending on the individual threshold values. This difference is not limited to a difference in the negative direction relative to the target value as in the above described embodiments, but a difference in the positive direction may also be employed. For example, two threshold values that are a positive value and a negative value relative to the target value, and that have the same absolute value of a difference from the target value, may also be employed as "different threshold values". Moreover, when positive threshold values relative to the target value are employed, the transporting error in a case wherein the transporting speed is increased can also be detected. Further, a plurality of target values can also be designated in accordance with the operating state of the transporting mechanism. For example, the target values can be designated in consonance with the control states at constant low speed, medium speed and high speed.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

## Claims

1. A sheet transporting apparatus, which includes a motor (314) and a transporting mechanism (419) to be driven by said motor to transport a sheet (S), and a detector (315) for detecting a driving amount per unit time (Dx, Vd) of the transporting mechanism driven by the motor, and which performs feedback control of the motor based on the driving amount per unit time of the transporting mechanism detected by the detector,
**characterized by** further comprising:
a comparator (351, 352) for comparing (S10, S12, S21, S22), with a plurality of threshold values (Da, Db, Va, Vb), the driving amount per unit time detected by the detector; and
a determination unit (351, 352) configured to determine (S11, S13) a transporting error that has occurred during transporting of the sheet, based on the comparison results obtained by the comparator.

2. The sheet transporting apparatus according to claim 1,
wherein the plurality of threshold values include a first threshold value (Vb, Db) and a second threshold value (Va, Da), a difference between the second threshold value and a target value (Vt) of the driving amount per unit time being greater than a difference between the first threshold value and the target value; and
wherein the determination unit determines (S13), based on a result of comparison of the driving amount per unit time and the first threshold value, whether the transporting error is an error that can be removed by an operator, and determines (S11), based on a result of comparison of the driving amount per unit time and the second threshold value, whether the transporting error is an error that can not be removed by the operator.

3. The sheet transporting apparatus according to claim 2,
wherein the error that can be removed includes jam of the sheet in the transporting mechanism; and
wherein the error that can not be removed includes at least either a failure of the transporting mechanism or a failure of the detector.

4. The sheet transporting apparatus according to one of claims 1 to 3,
wherein the detector includes an encoder for outputting a detection signal each time the transporting mechanism is driven at a predetermined distance, and detects the driving amount per unit time based on the detection signal of the encoder.

5. The sheet transporting apparatus according to one of claims 1 to 3,
wherein the detector includes an encoder for outputting a detection signal in accordance with a drive speed of the transporting mechanism, and detects the driving amount per unit time based on the detection signal of the encoder.

6. The sheet transporting apparatus according to one of claims 1 to 5,
wherein the transporting mechanism includes a transporting roller (7, 9) to be driven by the motor.

7. An image reading apparatus for reading an image on a sheet that is transported along a predetermined transporting path, comprising:
a sheet transporting apparatus (1) according to one of claims 1 to 6 in order to transport the sheet.

8. An image printing apparatus for printing an image on a sheet that is transported along a predetermined transporting path, comprising:
a sheet transporting apparatus (1) according to one of claims 1 to 6 in order to transport the sheet.

9. A sheet transporting method, which uses a motor (314) and a transporting mechanism (419) to be driven by said motor for transporting a sheet (S) and a detector (315) for detecting a driving amount per unit time (Dx, Vd) of the transporting mechanism driven by the motor, and which performs feedback control of the motor based on the driving amount per unit time of the transporting mechanism detected by the detector,
**characterized by** comprising the steps of:
comparing (S10, S12, S21, S22), with a plurality of threshold values (Da, Db, Va, Vb), the driving amount per unit time detected by the detector; and
determining (S11, S13) a transporting error that has occurred during transporting of the sheet, based on the comparison results obtained by the comparison step.

## Patentansprüche

1. Bogentransportvorrichtung, die einen Motor (314) und einen zum Transportieren eines Bogens (S) durch den Motor anzutreibenden Transportmechanismus (419) sowie einen Detektor (315) zum Detektieren eines Antriebsbetrags pro Zeiteinheit (Dx, Vd) des durch den Motor angetriebenen Transportmechanismus umfasst und die basierend auf dem durch den Detektor detektierten Antriebsbetrag pro Zeiteinheit des Transportmechanismus Feedbacksteuerung des Motors durchführt;
wobei die Vorrichtung **dadurch gekennzeichnet ist, dass** sie weiterhin umfasst:
einen Vergleicher (351, 352) zum Vergleichen (S10, S12, S21, S22) des durch den Detektor detektierten Antriebsbetrags pro Zeiteinheit mit mehreren Schwellenwerten (Da, Db, Va, Vb); und
eine Bestimmungseinheit (351, 352), die konfiguriert ist, basierend auf den durch den Vergleicher erfassten Vergleichsergebnissen einen Transportfehler, der während dem Transportieren des Bogens aufgetreten ist, zu bestimmen (S11,S13).

2. Bogentransportvorrichtung nach Anspruch 1,
wobei die mehreren Schwellenwerte einen ersten Schwellenwert (Vb, Db) und einen zweiten Schwellenwert (Va, Da) enthalten und eine Differenz zwischen dem zweiten Schwellenwert und einem Zielwert (Vt) des Antriebsbetrags pro Zeiteinheit größer ist als eine Differenz zwischen dem ersten Schwellenwert und dem Zielwert; und
wobei die Bestimmungseinheit basierend auf einem Ergebnis eines Vergleichs zwischen dem Antriebsbetrag pro Zeiteinheit und dem ersten Schwellenwert bestimmt (S13), ob der Transportfehler ein durch einen Bediener behebbarer Fehler ist, und basierend auf einem Ergebnis eines Vergleichs zwischen dem Antriebsbetrag pro Zeiteinheit und dem zweiten Schwellenwert bestimmt (S11), ob der Transportfehler ein nicht durch einen Bediener behebbarer Fehler ist.

3. Bogentransportvorrichtung nach Anspruch 2,
wobei der behebbare Fehler einen Stau des Bogens im Transportmechanismus umfasst; und
wobei der nicht behebbare Fehler mindestens eine Störung des Transportmechanismus oder eine Störung des Detektors umfasst.

4. Bogentransportvorrichtung nach einem der Ansprüche 1 bis 3,
wobei der Detektor einen Kodierer zum Ausgeben eines Detektionssignals bei jedem Antreiben des Transportmechanismus um eine vorbestimmte Entfernung beinhaltet und den Antriebsbetrag pro Zeiteinheit basierend auf dem Detektionssignal des Kodierers detektiert.

5. Bogentransportvorrichtung nach einem der Ansprüche 1 bis 3,
wobei der Detektor einen Kodierer zum Ausgeben eines Detektionssignals entsprechend einer Antriebsgeschwindigkeit des Transportmechanismus beinhaltet und den Antriebsbetrag pro Zeiteinheit basierend auf dem Detektionssignal des Kodierers detektiert.

6. Bogentransportvorrichtung nach einem der Ansprüche 1 bis 5,
wobei der Transportmechanismus eine durch den Motor anzutreibende Transportwalze (7, 9) enthält.

7. Bildlesevorrichtung zum Lesen eines Bilds auf einem Bogen, der entlang eines vorbestimmten Transportpfads transportiert wird, umfassend:
eine Bogentransportvorrichtung (1) nach einem der Ansprüche 1 bis 6 zum Transportieren des Bogens.

8. Bilddruckvorrichtung zum Drucken eines Bilds auf einen Bogen, der entlang eines vorbestimmten Transportpfads transportiert wird, umfassend:
eine Bogentransportvorrichtung (1) nach einem der Ansprüche 1 bis 6 zum Transportieren des Bogens.

9. Bogentransportverfahren, das einen Motor (314) und einen zum Transportieren eines Bogens (S) durch den Motor anzutreibenden Transportmechanismus (419) sowie einen Detektor (315) zum Detektieren eines Antriebsbetrags pro Zeiteinheit (Dx, Vd) des durch den Motor angetriebenen Transportmechanismus verwendet und das basierend auf dem durch den Detektor detektierten Antriebsbetrag pro Zeiteinheit des Transportmechanismus Feedbacksteuerung des Motors durchführt;
wobei das Verfahren **dadurch gekennzeichnet ist, dass** es die folgenden Schritte umfasst:
Vergleichen (S10, S12, S21, S22) des durch den Detektor detektierten Antriebsbetrags pro Zeiteinheit mit mehreren Schwellenwerten (Da, Db, Va, Vb); und
Bestimmen (S11, S13) eines Transportfehlers, der während dem Transportieren des Bogens aufgetreten ist, basierend auf den durch den Vergleichsschritt erfassten Vergleichsergebnissen.

## Revendications

1. Appareil de transport de feuille, qui comporte un moteur (314) et un mécanisme de transport (419) devant être entraîné par ledit moteur pour transporter une feuille (S), et un détecteur (315) pour détecter une quantité d'entraînement par unité de temps (Dx, Vd) du mécanisme de transport entraîné par le moteur, et qui effectue une commande du moteur avec rétroaction sur la base de la quantité d'entraînement par unité de temps du mécanisme de transport, détectée par le détecteur, **caractérisé en ce qu'**il comprend en outre :
un comparateur (351, 352) destiné à comparer (S10, S12, S21, S22), à une pluralité de valeurs de seuil (Da, Db, Va, Vb), la quantité d'entraînement par unité de temps détectée par le détecteur ; et
une unité de détermination (351, 352) configurée pour déterminer (S11, S13) une erreur de transport qui s'est produite pendant le transport de la feuille, sur la base des résultats de comparaison obtenus par le comparateur.

2. Appareil de transport de feuille selon la revendication 1, dans lequel la pluralité de valeurs de seuil comporte une première valeur de seuil (Vb, Db) et une seconde valeur de seuil (Va, Da), une différence entre la seconde valeur de seuil et une valeur cible (Vt) de la quantité d'entraînement par unité de temps étant supérieure à une différence entre la première valeur de seuil et la valeur cible ; et
dans lequel l'unité de détermination détermine (S13), sur la base d'une comparaison entre le résultat de la quantité d'entraînement par unité de temps et la première valeur de seuil, si l'erreur de transport est une erreur qui peut être éliminée par un opérateur, et détermine (811), sur la base du résultat de la comparaison entre la quantité d'entraînement par unité de temps et la seconde valeur de seuil, si l'erreur de transport est une erreur qui ne peut pas être éliminée par l'opérateur.

3. Appareil de transport de feuille selon la revendication 2,
dans lequel l'erreur qui peut être éliminée comporte un bourrage de la feuille dans le mécanisme de transport ; et
dans lequel l'erreur qui ne peut pas être éliminée comprend au moins soit une défaillance du mécanisme de transport, soit une défaillance du détecteur.

4. Appareil de transport de feuille selon l'une des revendications 1 à 3,
dans lequel le détecteur comporte un codeur destiné à délivrer un signal de détection chaque fois que le mécanisme de transport est entraîné à une distance prédéterminée, et détecte la quantité d'entraînement par unité de temps en fonction du signal de détection du codeur.

5. Appareil de transport de feuille selon l'une des revendications 1 à 3,
dans lequel le détecteur comporte un codeur destiné à délivrer un signal de détection conformément à une vitesse d'entraînement du mécanisme de transport, et détecte la quantité d'entraînement par unité de temps sur la base du signal de détection du codeur.

6. Appareil de transport de feuille selon l'une des revendications 1 à 5, dans lequel le mécanisme de transport comprend un rouleau de transport (7, 9) devant être entraîné par le moteur.

7. Appareil de lecture d'image destiné à lire une image sur une feuille qui est transportée le long d'un trajet de transport prédéterminé, comprenant :
un appareil de transport de feuille (1) selon l'une des revendications 1 à 6 afin de transporter la feuille.

8. Appareil d'impression d'image destiné à imprimer une image sur une feuille qui est transportée le long d'un trajet de transport prédéterminé, comprenant :
un appareil de transport de feuille (1) selon l'une des revendications 1 à 6 afin de transporter la feuille.

9. Procédé de transport de feuille, qui utilise un moteur (314) et un mécanisme de transport (419) devant être entraîné par ledit moteur pour transporter une feuille (5) et un détecteur (315) destiné à détecter une quantité d'entraînement par unité de temps (Dx, Vd) du mécanisme de transport entraîné par le moteur, et qui effectue une commande du moteur avec rétroaction sur la base de la quantité d'entraînement par unité de temps du mécanisme de transport, détectée par le détecteur, **caractérisé par** les étapes consistant à :
comparer (S10, S12, S21, S22), à une pluralité de valeurs de seuil (Da, Db, Va, Vb), la quantité d'entraînement par unité de temps détectée par le détecteur ; et
déterminer (S11, S13) une erreur de transport qui s'est produite pendant le transport de la feuille, sur la base des résultats de la comparaison obtenus à l'étape de comparaison.
